# EUROPÄISCHE PATENTANMELDUNG

(11) **EP 4 262 173 A1**
(43) Veröffentlichungstag der Anmeldung: **18.10.2023**
(21) Anmeldenummer: 22163178.1
(22) Anmeldetag: 21.03.2022
(51) Int. Cl.: H04L 61/00

(54) **HARMONISIERUNG EINES KOMMUNIKATIONSNETZES FÜR PRODUKTIONSANLAGEN**

(71) Anmelder: Siemens Aktiengesellschaft, 80333 München (DE)
(72) Erfinder: Zeiger, Florian, 85635 Höhenkirchen-Siegertsbrunn (DE); Zirkler, Andreas, 85521 Ottobrunn (DE)
(74) Vertreter: Siemens Patent Attorneys

(57) **Zusammenfassung**

Die Erfindung gibt ein automatisiertes Verfahren zur Unterstützung der Kommunikation in einem Kommunikationsnetz an, wobei das Kommunikationsnetz ein Anlagennetz (AN) und mehrere Zellennetze (ZN1, Z2N) aufweist, wobei die Zellennetze jeweils mehrere Geräte (D1 bis D8) aufweisen, die mit dem Anlagennetz (AN) kommunizieren, wobei die IP-Adressen der Geräte (D1 bis D8) durch eine in einer Gateway -Einheit (GW1, GW2) gespeicherten Zuordnungstabelle für IP-Adressen bei der Kommunikation über die Gateway-Einheit (GW1, GW2) für das Anlagennetz (AN) eindeutig adressierbar gemacht werden, wobei jeweils eine Gateway-Einheit (GW1, GW2) zwischen dem Anagennetz (AN) und jedem Zellennetz (ZN1, Z2N) angeordnet ist.

Eine zugehörige Anordnung wird ebenfalls angegeben.

## Beschreibung

### GEBIET DER ERFINDUNG

Die Erfindung betrifft ein automatisiertes Verfahren und eine Anordnung zur Unterstützung der Kommunikation in einem Kommunikationsnetz, wobei das Kommunikationsnetz ein Anlagennetz und mehrere Zellennetze aufweist, wobei die Zellennetze jeweils mehrere Geräte aufweisen, die mit dem Anlagennetz kommunizieren.

### HINTERGRUND DER ERFINDUNG

Produktionsanlagen sind typischerweise in Fertigungszellen strukturiert. Eine Fertigungszelle kann beispielsweise eine Roboterzelle sein, die Karosserieteile zusammenfügt. Die halbfertige Karosserie wird dann in die nächste Fertigungselle (kurz auch als Zelle bezeichnet) weiter gefördert, wo weitere Teile montiert werden. Die einzelnen Zellen werden häufig von verschiedenen Herstellern zugeliefert und vom Anlagenbetreiber zu einer Gesamtanlage (= Produktionsanlage) verbunden.

Aus Sicht einer industriellen Kommunikationstechnik ergeben sich dadurch mehrere Herausforderungen. Zunächst muss jede Zelle autonom betriebsfähig werden können, da die Zelle vor dem Einbau in die Gesamtanlage aufgebaut, getestet und abgenommen werden muss. Innerhalb einer Zelle gibt es häufig sehr hohe Anforderungen an die Zuverlässigkeit und Echtzeitfähigkeit eines Kommunikationssystems.

Gleichzeitig muss sich das Kommunikationssystem in die Gesamtanlage einfügen, z.B. weil eine Steuerung der Gesamtanlage einer Steuerung der Zellen Vorgaben zum Produktionsprozess macht, oder weil Wartungspersonal auf Geräte innerhalb der Gesamtanlage und der Zellen zugreifen muss. Die beiden letztgenannten Anforderungen steigen im Zuge der vertikalen Integration bis in die Cloud stark an.

Die Namens- und Adressvergabe ist in Produktionsanlagen, insbesondere in Anlagen, die aus Zellen unterschiedlicher Hersteller zusammengestellt sind, seit vielen Jahren ein Problem, das oft zu zeit- und kostenintensiven Verzögerungen bei der Inbetriebnahme geführt hat. Die durchgängige vertikale Integration, die erst durch Ethernet-basierte Kommunikationssysteme ermöglicht wurde, hat dieses Problem noch verschärft, da die vergebenen Adressen dadurch in noch größeren Netzwerken eindeutig sein müssen.

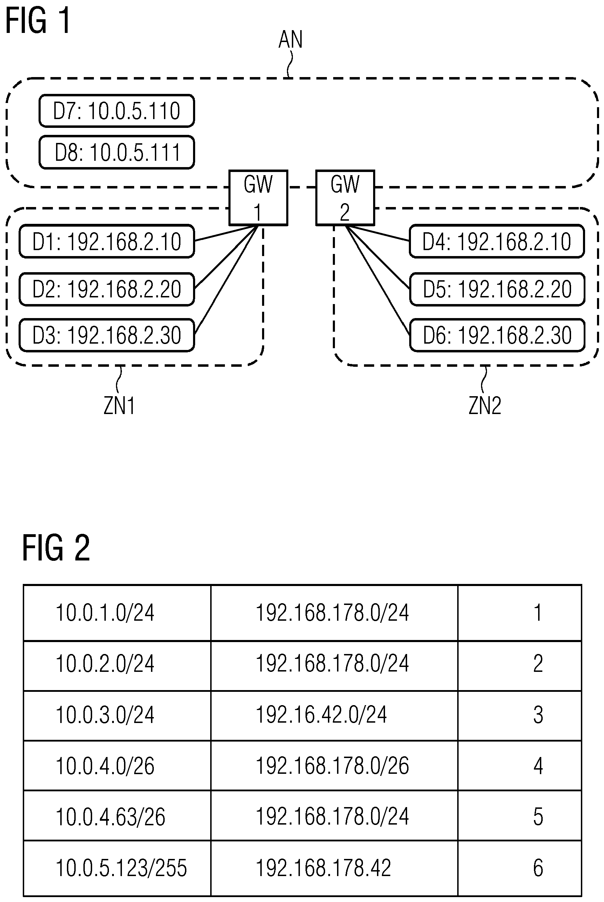

Zudem hat man oft auch die Situation, dass identisch konfigurierte Fertigungszellen mehrfach vorliegen und somit auch im Auslieferzustand eine identische Adressierung der Einzelkomponenten (= Geräte) vorliegt. Auch hier stellt sich beim Verbinden dieser Fertigungszellen die Frage, wie in diesen dennoch Geräte/Komponenten eindeutig adressiert werden können. In einem solchen Fall, wie in FIG. 1 dargestellt, kann nicht mehr durchgängig mit Routing gearbeitet werden, insbesondere weil Geräte und Protokolle, die typischerweise in Fertigungszellen verwendet werden, oft kein Routing unterstützen.

FIG. 1 zeigt ein Kommunikationssystem mit einem Anlagennetz AN mit den Geräten D7 und D8, einem ersten Zellennetz ZN1 mit den Geräten D1 bis D3 und einem zweiten Zellenetz ZN2 mit den Geräten D4 bis D6, wobei das Anlagennetz AN über eine erste Gateway-Einheit GW1 mit dem ersten Zellennetz ZN1 und über die zweite Gateway-Einheit GW2 mit dem zweiten Zellennetz ZN2 verbunden ist.

Die erste Gateway-Einheit GW1 hat die IP-Adresse 10.0.5.100 für das Anlagennetz AN und die IP-Adresse 192.168.2.1 für das erste Zellennetz ZN1. Die zweite Gateway-Einheit GW2 hat die IP-Adresse 10.0.5.101 für das Anlagennetz AN und die IP-Adresse 192.168.2.1 für das zweite Zellennetz ZN1. Die IP-Adressen der Geräte D1 bis D8 sind aus FIG. 1 ersichtlich.

Es gibt bekannte Lösungen für die Adressvergabe in Zell- und Anlagennetzen. Dabei wird auf dem IPv6 Standard aufgesetzt. Jede Zelle wird mit einem Zellenrouter ausgestattet, der die Adressen der Geräte innerhalb der Zelle verwaltet. Gerätenamen können dabei über einen DNS-Dienst aufgelöst werden. Beim Zusammenschluss von Zellen zu einer Gesamtanlage vergibt ein sogenannter Anlagenrouter ein Adress-Präfix an den Zellenrouter (= Address delegation), der Zellenrouter passt automatisch die Adressen der Geräte innerhalb der Zelle an.

Per NAT64 ist es sogar möglich, IPv4 basierte legacy-Zellen, z.B. mit existierenden Profinet-Geräten, in ein Anlagennetz einzubinden. Die einzige topologische Einschränkung des Konzeptes besteht darin, dass jedes Zellnetzwerk ein abgeschlossenes Layer 2 Netzwerk sein muss.

Heute unterstützen aber viele Geräte auf der Zellenebene weder ein IPv6 noch ein IPv4 Routing. So funktionieren z.B. TSN Netzwerk-Controller nur, wenn sie direkten Layer 2 Zugriff auf die von Ihnen verwalteten Switches haben. Auch die Konfiguration von Speicherprogrammierbaren Steuerungen (SPS) sowie die Verwaltung von Edge-Clustern, z.B. mit Kubernetes, funktionieren nicht oder nur mit erheblichem Mehraufwand über Router hinweg.

Für die zeitlichen Anforderungen der vertikalen Kommunikation ist die Kommunikation über einen Router, oder die hier vorgeschlagene Alternative, in den meisten Fällen ausreichend, da die Echtzeitanforderungen für die Kommunikation mit der Anlagensteuerung, und insbesondere für die Kommunikation zu Diagnose- und Wartungszwecken, weniger hoch sind. Für so genannte Industrie 4.0 Anwendungen sind aber auch hier zukünftig steigende Anforderungen zu erwarten.

### ZUSAMMENFASSUNG DER ERFINDUNG

Es ist Aufgabe der Erfindung, eine Lösung anzugeben, die auch bei Industrie 4.0 Anwendungen eine Kommunikation mit Fertigungszellen einer Anlage sicher ermöglicht.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

In einem Aspekt der Erfindung wird ein herkömmlicher Router durch eine Adapterkomponente (= Gateway-Einheit) ersetzt. Mithilfe einer konfigurierten Zuordnungstabelle in der Adapterkomponente können herkömmliche Geräte in Zell- und Anlagennetzen miteinander kommunizieren, als wären sie Teil eines einzigen Layer 2 Netzwerks, ohne dass ihre IP-Adressen eindeutig sein müssen.

Die Erfindung kann mit der Offenbarung der internationalen Patentanmeldung WO 2020/015835 A1 kombiniert werden oder in Hardware, beispielsweise in einem FPGA, realisiert werden. Somit können auch Kommunikationsbeziehungen mit harten Echtzeitanforderungen durch die Gateway-Komponente übertragen werden.

Die Erfindung beansprucht ein automatisiertes Verfahren zur Unterstützung der Kommunikation in einem Kommunikationsnetz, wobei das Kommunikationsnetz ein Anlagennetz und mehrere Zellennetze aufweist, wobei die Zellennetze jeweils mehrere Geräte aufweisen, die mit dem Anlagennetz kommunizieren, wobei die IP-Adressen der Geräte durch eine in einer Gateway - Einheit gespeicherten Zuordnungstabelle für IP-Adressen bei der Kommunikation über die Gateway-Einheit für das Anlagennetz eindeutig adressierbar gemacht werden, wobei jeweils eine Gateway-Einheit zwischen dem Anagennetz und jedem Zellennetz angeordnet ist.

Damit können die Geräte miteinander kommunizieren, als ob sie sich im selben Layer-2-Subnetz befinden würden.

In einer Weiterbildung des Verfahrens können durch die Gateway-Einheit die IP-Adressen von Datenpakten, welche die Gateway-Einheit passieren, anhand der Zuordnungstabelle ersetzt werden.

In einer Weiterbildung des Verfahrens können beim Ersetzen vollständige IP-Adressbereiche oder einzelne Adressen aus einem Zellennetz zugeordnet werden.

Hervorzuheben ist, dass Adressen in verschiedenen Zellennetzen nicht eindeutig sein müssen, weil sie über verschiedene Adapterkomponenten (= Gateway Einheiten) übertragen werden und dort in Adressen übersetzt werden, die im Anlagennetz eindeutig sind.

In einer Weiterbildung des Verfahrens kann das in Layer-2-Netzen verwendete Address Resolution Protocol (ARP) unterstützt werden, wobei durch die Gateway-Einheit ARP Telegramme weitergeleitet werden und dabei sowohl in einem ARP request als auch in einem ARP response eine Quell-IP-Adresse und eine Ziel-IP-Adresse anhand der Zuordnungstabelle ausgetauscht werden.

Ziel- und Quell-MAC-Adressen werden im Unterschied zum Router nicht verändert.

In einer Weiterbildung des Verfahrens können MAC-Adressen anhand der Zuordnungstabelle verändert werden, falls die MAC-Adressen in dem Zellennetz nicht eindeutig sind.

Dies widerspricht zwar eigentlich dem Ethernet Standard, ist aber insbesondere bei virtuellen Komponenten dennoch nicht selten.

In einer Weiterbildung des Verfahrens können die Adresstransformationen Hardware-basiert, beispielsweise in einem FPGA, oder programmiert über eine höhere Programmiersprache, beispielsweise P4, ausgeführt werden.

Dadurch werden für die übertragenen Datenpakete Echtzeitgarantien gegeben.

In einer Weiterbildung des Verfahrens kann die Gateway-Einheit parallel zu einem Router verwendet werden, falls auf Geräte mit und ohne Routing zugegriffen wird.

In einer Weiterbildung des Verfahrens kann die Gateway-Einheit in einen Router, einer Firewall oder in Form einer Virtual Network Function eingerichtet werden.

Die Erfindung beansprucht auch eine Anordnung zur Unterstützung der Kommunikation in einem Kommunikationsnetz, aufweisend:
- ein Anlagennetz und
- mehrere Zellennetze,
   wobei die Zellennetze jeweils mehrere Geräte aufweisen, die mit dem Anlagennetz kommunizieren,
- Gateway-Einheiten, wobei jeweils eine Gateway-Einheit zwischen dem Anagennetz und jedem Zellennetz angeordnet ist,
- wobei die Gateway-Einheit eingerichtet ist, IP-Adressen der Geräte durch eine gespeicherte Zuordnungstabelle für IP-Adressen bei der Kommunikation über die Gateway-Einheit für das Anlagennetz eindeutig adressierbar zu machen.

In einer Weiterbildung der Anordnung kann die Gateway-Einheit eingerichtet sein, die IP-Adressen von Datenpakten, die die Gateway-Einheit passieren, anhand der Zuordnungstabelle zu ersetzen.

In einer Weiterbildung der Anordnung kann die Gateway-Einheit eingerichtet sein, beim Ersetzen vollständige IP-Adressbereiche oder einzelne Adressen aus einem Zellennetz zugzuordnen.

In einer Weiterbildung der Anordnung kann die Gateway-Einheit eingerichtet sein, ein in Layer-2-Netzen verwendetes Address Resolution Protocol (ARP) zu unterstützen, wobei durch die Gateway-Einheit ARP Telegramme weitergeleitet werden und dabei sowohl in einem ARP request als auch in einem ARP response eine Quell-IP-Adresse und eine Ziel-IP-Adresse anhand der Zuordnungstabelle ausgetauscht werden.

In einer Weiterbildung der Anordnung kann die Gateway-Einheit eingerichtet sein, MAC-Adressen anhand der Zuordnungstabelle zu verändern, falls die MAC-Adressen in dem Zellennetz nicht eindeutig sind.

In einer Weiterbildung der Anordnung kann die Gateway-Einheit eingerichtet sein, die Adresstransformationen Hardware-basiert, beispielsweise in einem FPGA, oder programmiert über eine höhere Programmiersprache, beispielsweise P4, auszuführen.

In einer Weiterbildung der Anordnung kann die Gateway-Einheit eingerichtet sein, parallel zu einem Router verwendet zu werden, falls auf Geräte mit und ohne Routing zugegriffen wird.

In einer Weiterbildung der Anordnung kann die Gateway-Einheit in einen Router, einer Firewall oder in Form einer Virtual Network Function ausgebildet sein.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
- FIG. 1: Adressierung gemäß Stand der Technik,
- FIG. 2: Beispiel einer Zuordnungstabelle,
- FIG. 3: ein Ausführungsbeispiel gemäß Zeile 6 der Tabelle in FIG. 2 und
- FIG. 4: ein Ablaufdiagramm.

### DETAILLIERTE BESCHREIBUNG DER ERFINDUNG

Erfindungsgemäß werden die Zellen über eine Adapterkomponente mit einem Anlagennetz verbunden. Die Adapterkomponente (= Gateway Einheit) verfügt - ähnlich wie ein Router - beispielsweise über zwei Ethernet Interfaces, die jeweils mit dem Anlagennetz bzw. einem Zellennetz verbunden sind. Ähnlich wie ein Router transportiert die Adapterkomponente Pakete in ein Zellennetz hinein oder aus einem Zellennetz hinaus, wenn die Zieladresse im jeweils anderen Netzteil liegt.

Im Unterschied zum Routing, bei dem Geräte im Zellennetz feststellen, dass die gesuchte Adresse lokal nicht verfügbar ist und das Paket deshalb an die MAC-Adresse des Standard-Gateway versenden, und Geräte im Anlagennetz Daten an den richtigen Port des Routers adressieren müssen, ist die in dieser Erfindung vorgeschlagene Adapterkomponente für die beteiligten Endgeräte völlig transparent. Damit können die Geräte miteinander kommunizieren, als ob sie sich im selben Layer-2-Subnetz befinden würden.

Um dieses zu ermöglichen, tauscht die Adapterkomponente die IP-Adressen der Pakete, die sie passieren lässt, nach einem vorgegebenen Schema aus. Dazu können z.B. ganze IP-Adressbereiche zugeordnet werden, oder einzelne Adressen aus einem Subnetz. Besonders hervorzuheben ist dabei, dass Adressen in verschiedenen Zellnetzen nicht eindeutig sein müssen, weil sie über verschiedene Adapterkomponenten übertragen werden und dort in Adressen übersetzt werden, die im Anlagennetz eindeutig sind.

Ein Beispiel ist in der Tabelle der FIG. 2 dargestellt. In der ersten Spalte S1 ist der Adressbereich des Anlagenetzes AN, in der zweiten Spalte S2 der Adressbereich der Zellenetze ZN1 bis ZN2 und in der dritten Spalte die Zeilennummer angeben. Dabei stellen die Beispiele der Zellen 1-3 Vorzugslösungen dar, die sich besonders einfach konfigurieren lassen. Zeile 4 in der Tabelle teilt sich ein /26 Subnetz mit Zeile 5, was in diesem Fall nur möglich ist, wenn im Zellennetz ZN4 der Zeile 4 nur die Adressen 192.168.178.0 bis 192.168.178.62 verwendet werden oder aus dem Anlagennetz AN erreichbar sein sollen. In der Zelle 5 können 63 beliebige Adressen verwendet werden, allerdings zum Preis eines deutlich erhöhten Konfigurationsaufwandes für das Mapping einzelner IP-Adressen, wie im Beispiel der Zelle 6 für eine einzelne Adresse angegeben.

Die Gateway-Einheiten selbst müssen demnach nur für alle Pakete, die aus einem oder in ein Zellennetz transportiert werden sollen, die IP-Adressen entsprechend der einmal konfigurierten Zuordnung austauschen.

Um auch das in Layer-2-Netzen wichtige Address Resolution Protocol (ARP) zu unterstützen, muss sie zudem ARP Telegramme weiterleiten und entsprechend verändern. Dazu muss die Adapterkomponente sowohl in einem ARP request als auch in einem ARP response die Quell-IP-Adresse und Ziel-IP-Adresse nach der oben beschriebenen Zuordnung austauschen.

Ziel- und Quell-MAC-Adressen werden im Unterschied zum Router nicht verändert.

In einer Ausführungsform können auch MAC-Adressen anhand vorgegebener Zuordnungstabellen verändert werden, falls die MAC Adressen in den Zellen nicht eindeutig sind. Dies widerspricht zwar eigentlich dem Ethernet Standard, ist aber insbesondere bei virtuellen Komponenten dennoch nicht selten.

In einer weiteren Ausführungsform können die beschriebenen Adresstransformationen Hardware-basiert, z.B. in einem FPGA, vorzugsweise programmiert über eine höhere Programmiersprache wie P4, umgesetzt werden, um für die übertragenen Pakete Echtzeit-garantien geben zu können.

In einer weiteren Ausführungsform können die beschriebenen Mechanismen parallel zu einem herkömmlichen Router verwendet werden, wenn nur auf ausgewählte Geräte ohne Routing zugegriffen werden soll.

In einer weiteren Ausführungsform können die beschriebenen Mechanismen in einen Router oder eine Firewall integriert werden oder in Form einer virtual network function bereitgestellt werden.

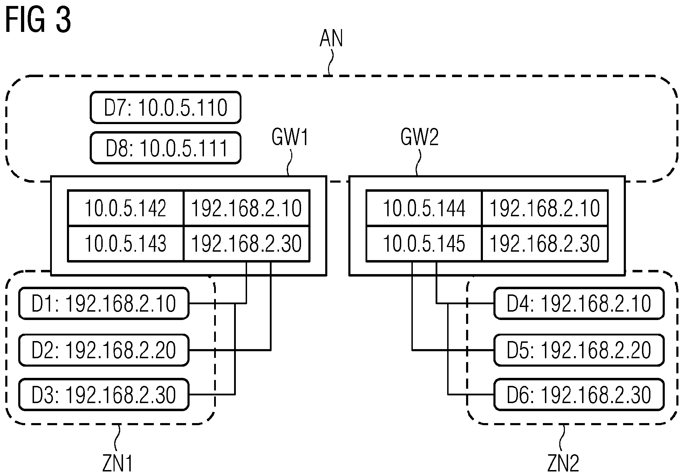

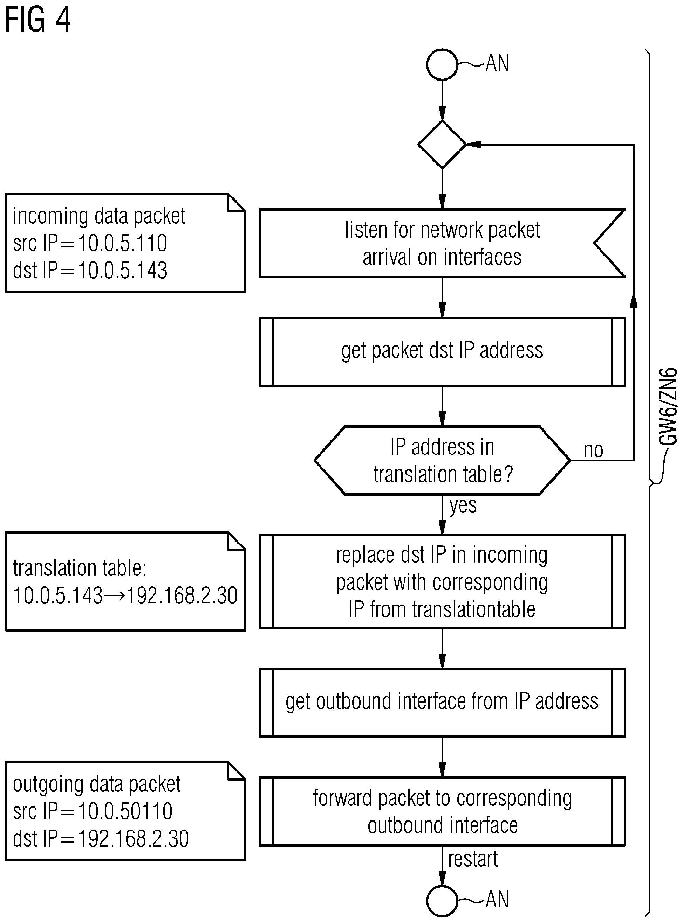

FIG. 3 und FIG. 4 zeigen ein Beispiel gemäß dem Kommunikationsnetz nach FIG. 1, in dem der vorgestellte Mechanismus auf den Netzwerkinterfaces des Host-Systems arbeitet. Im Beispiel des Ablaufdiagrams der FIG. 4 wird ein Datenpaket von der IP-Adresse 10.0.5.110 empfangen und soll zur Zieladresse 10.0.5.143 geschickt werden. Für das Beispiel dient für die Übersetzung der IP-Adressen die Zeile 6 der Zuordnungstabelle aus FIG. 2. Mithilfe der Zuordnungstabelle in der ersten Gateway-Einheit GW1 des ersten Zellennetzes ZN1 wird die IP-Adresse 10.0.5.143 durch die IP-Adresse 192.168.2.30 ersetzt.

Der in FIG. 4 gezeigte Ablauf ist als Beispiel zu sehen. Es ist möglich, den vorgeschlagenen Mechanismus auch für nur ausgewählte Netzwerkinterfaces eines Hostsystems zu nutzen. Um eine Antwort vom Gerät D3 an das Gerät D7 zu ermöglichen, wäre eine weitere Zeile in der Zuordnungstabelle erforderlich, die D7 eine im Zellennetz ZN1 adressierbare Adresse zuweist. Die Gateway-Einheit würde dann entsprechend auch die Absender-IP-Adresse austauschen, sodass D3 in der Lage wäre die Antwort richtig zu adressieren.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Ein automatisiertes Verfahren zur Unterstützung der Kommunikation in einem Kommunikationsnetz, wobei das Kommunikationsnetz ein Anlagennetz (AN) und mehrere Zellennetze (ZN1, ZN2) aufweist, wobei die Zellennetze jeweils mehrere Geräte (D1 bis D8) aufweisen, die mit dem Anlagennetz (AN) kommunizieren, **dadurch gekennzeichnet,**
**dass** die IP-Adressen der Geräte (D1 bis D8) durch eine in einer Gateway -Einheit (GW1, GW2) gespeicherten Zuordnungstabelle für IP-Adressen bei der Kommunikation über die Gateway-Einheit (GW1, GW2) für das Anlagennetz (AN) eindeutig adressierbar gemacht werden, wobei jeweils eine Gateway-Einheit (GW1, GW2) zwischen dem Anagennetz (AN) und jedem Zellennetz (ZN1, Z2N) angeordnet ist.

2. Das Verfahren nach Anspruch 1, **dadurch gekennzeichnet, dass** durch die Gateway-Einheit (GW1, GW2) die IP-Adressen von Datenpakten, welche die Gateway-Einheit (GW1, GW2) passieren, anhand der Zuordnungstabelle ersetzt werden.

3. Das Verfahren nach Anspruch 2, **dadurch gekennzeichnet, dass** beim Ersetzen vollständige IP-Adressbereiche oder einzelne Adressen aus einem Zellennetz zugeordnet werden.

4. Das Verfahren nach Anspruch 2 oder 3, **dadurch gekennzeichnet,**
**dass** das in Layer-2-Netzen verwendete Address Resolution Protocol (ARP) unterstützt wird, wobei durch die Gateway-Einheit (GW1, GW2) ARP Telegramme weitergeleitet werden und dabei sowohl in einem ARP request als auch in einem ARP response eine Quell-IP-Adresse und eine Ziel-IP-Adresse anhand der Zuordnungstabelle ausgetauscht werden.

5. Das Verfahren nach einem der Ansprüche 2 bis 4, **dadurch gekennzeichnet,**
**dass** MAC-Adressen anhand der Zuordnungstabelle verändert werden, falls die MAC-Adressen in dem Zellennetz nicht eindeutig sind.

6. Das Verfahren nach einem der Ansprüche 2 bis 5, **dadurch gekennzeichnet,**
**dass** die Adresstransformationen Hardware-basiert, beispielsweise in einem FPGA, oder programmiert über eine höhere Programmiersprache, beispielsweise P4, ausgeführt werden.

7. Das Verfahren nach einem der Ansprüche 2 bis 6, **dadurch gekennzeichnet,**
**dass** die Gateway-Einheit (GW1, GW2) parallel zu einem Router verwendet wird, falls auf Geräte (D1 bis D8) mit und ohne Routing zugegriffen wird.

8. Das Verfahren nach einem der Ansprüche 2 bis 7, **dadurch gekennzeichnet,**
**dass** die Gateway-Einheit (GW1, GW2) in einen Router, einer Firewall oder in Form einer Virtual Network Function eingerichtet wird.

9. Eine Anordnung zur Unterstützung der Kommunikation in einem Kommunikationsnetz, aufweisend:
- ein Anlagennetz (AN) und
- mehrere Zellennetze (ZN1, ZN2),
wobei die Zellennetze (ZN1, ZN2), jeweils mehrere Geräte (D1 bis D8) aufweisen, die mit dem Anlagennetz kommunizieren, **gekennzeichnet durch**:
- Gateway-Einheiten (GW1, GW2), wobei jeweils eine Gateway-Einheit (GW1, GW2) zwischen dem Anagennetz (AN) und jedem Zellennetz (ZN1, ZN2), angeordnet ist,
- wobei die Gateway-Einheit (GW1, GW2) eingerichtet ist, IP-Adressen der Geräte (D1 bis D9) **durch** eine gespeicherte Zuordnungstabelle für IP-Adressen bei der Kommunikation über die Gateway-Einheit (GW1, GW2) für das Anlagennetz (AN) eindeutig adressierbar zu machen.

10. Die Anordnung nach Anspruch 9, **dadurch gekennzeichnet, dass** die Gateway-Einheit (GW1, GW2) eingerichtet ist, die IP-Adressen von Datenpakten, die die Gateway-Einheit (GW1, GW2) passieren, anhand der Zuordnungstabelle zu ersetzen.

11. Die Anordnung nach Anspruch 10, **dadurch gekennzeichnet, dass** die Gateway-Einheit (GW1, GW2) eingerichtet ist, beim Ersetzen vollständige IP-Adressbereiche oder einzelne Adressen aus einem Zellennetz (ZN1, ZN2) zugzuordnen.

12. Die Anordnung nach Anspruch 10 oder 11, **dadurch gekennzeichnet,**
**dass** die Gateway-Einheit (GW1, GW2) eingerichtet ist, ein in Layer-2-Netzen verwendetes Address Resolution Protocol (ARP) zu unterstützen, wobei durch die Gateway-Einheit (GW1, GW2) ARP Telegramme weitergeleitet werden und dabei sowohl in einem ARP request als auch in einem ARP response eine Quell-IP-Adresse und eine Ziel-IP-Adresse anhand der Zuordnungstabelle ausgetauscht werden.

13. Die Anordnung nach einem der Ansprüche 10 bis 12, **dadurch gekennzeichnet,**
**dass** die Gateway-Einheit (GW1, GW2) eingerichtet ist, MAC-Adressen anhand der Zuordnungstabelle zu verändern, falls die MAC-Adressen in dem Zellennetz nicht eindeutig sind.

14. Die Anordnung nach einem der Ansprüche 10 bis 13, **dadurch gekennzeichnet,**
**dass** die Gateway-Einheit (GW1, GW2) eingerichtet ist, die Adresstransformationen Hardware-basiert, beispielsweise in einem FPGA, oder programmiert über eine höhere Programmiersprache, beispielsweise P4, auszuführen.

15. Die Anordnung nach einem der Ansprüche 10 bis 14, **dadurch gekennzeichnet,**
**dass** die Gateway-Einheit (GW1, GW2) eingerichtet ist, parallel zu einem Router verwendet zu werden, falls auf Geräte mit und ohne Routing zugegriffen wird.

16. Die Anordnung nach einem der Ansprüche 10 bis 15, **dadurch gekennzeichnet,**
**dass** die Gateway-Einheit (GW1, GW2) in einen Router, einer Firewall oder in Form einer Virtual Network Function ausgebildet ist.
